# EUROPEAN PATENT APPLICATION

(11) **EP 4 286 672 A1**
(43) Date of publication of application: **06.12.2023**
(21) Application number: 23176570.2
(22) Date of filing: 31.05.2023
(51) Int. Cl.: F02C 3/30, F02C 7/12, F02C 7/224, F02K 7/10, F02K 7/14

(54) **SYSTEM FOR COOLING AND FUELING A HYPERSONIC ENGINE AND METHODS THEREOF**

(30) Priority: 31.05.2022 US 202217828191
(71) Applicant: General Electric Company, Schenectady, NY 12345 (US)
(72) Inventor: BALEPIN, Vladimir, Manorville, 11949 (US); MODROUKAS, Dean, Scarsdale, 10583 (US); BAKOS, Robert, Wading River, 11792 (US)
(74) Representative: Openshaw & Co.

(57) **Abstract**

A cooling and fueling system (100) for a hypersonic vehicle includes a regenerative cooling circuit (110), a fuel tank (120) configured to support fuel, a water tank (130) configured to support water, and a valve (140b) disposed between the water tank and the regenerative cooling circuit. The valve is actuatable to dispense water from the water tank when the hypersonic vehicle reaches a threshold speed to enable the water to mix with the fuel to produce a combustible mixture that passes through the regenerative cooling circuit. The combustible mixture is configured to inhibit fuel coking and has a predetermined thermal property configured to cool a surface of a hot engine wall of the hypersonic vehicle as the combustible mixture passes through the regenerative cooling circuit.

## Description

### TECHNICAL FIELD

This disclosure relates to hypersonic engines, and specifically, to a cooling and fueling system for hypersonic engines.

### BACKGROUND

Existing hypersonic vehicles are powered by ramjet or scramjet (supersonic combustion ramjet) engines that experience harsh conditions due to the temperature of the incoming air and the even higher temperatures in a combustion chamber of the ramjet or scramjet engine. High enthalpy of the air flow at hypersonic velocities (beyond about Mach 6) is complemented by a high enthalpy release in the combustion chamber of the ramjet or scramjet engines. The large amount of heat in the engine requires cooling and the cooling capacity is a limiting factor for further increasing the Mach number or flight velocity of the hypersonic engine. Hypersonic engines are normally fueled by hydrocarbon fuels, including, for example, JP-7, JP-8, JP-10, RP-2, LNG, methane, or propane, that are also used for regenerative cooling by passing the hydrocarbon fuel through a cooling circuit that acts as a heat exchanger with the hypersonic engine. Hydrocarbon fuels are known to decompose at elevated temperatures thereby causing precipitation and depositing of graphite particles or other possible unwanted particles on the elevated temperature surfaces, a phenomenon called fuel coking. Fuel coking limits cooling capacity of the fuel of a hypersonic engine at high Mach numbers due to the risk of the cooling channels fouling from fuel coking. One solution to limit fuel coking to achieve higher Mach numbers or longer flight time is to over fuel (e.g., pump more fuel than needed to the combustion chamber) and thereby overcool the scramjet in order to keep a fuel bulk temperature (temperature of the fuel as it passes through the regenerative cooling circuit) under the fuel coking limits. However, over fueling impedes optimal operation of the hypersonic engine due to the inherent fuel waste, thus lowering a specific impulse (I_{SP}) of the hypersonic engine, results in shorter flight range of the hypersonic vehicle, and limits higher speeds of the hypersonic vehicle.

Some prior art solutions attempt to use "endothermic" hydrocarbon fuel. Such hydrocarbon fuel decomposes at elevated temperatures and adds endothermic heat from the decomposition of the hydrocarbon fuel to the fuel sensible heat thereby increasing the capacity of the fuel to absorb heat from the combustion chamber. However, the resulting increase in the total heat capacity is still not sufficient for significant Mach number extension. Further, endothermic hydrocarbon fuels have not demonstrated significant improvement of the fuel coking limit.

### SUMMARY

This disclosure provides an improved cooling and fueling system for hypersonic vehicles to increase the maximum Mach number, flight velocity, and range. In particular, a cooling and fueling system for a hypersonic vehicle includes a regenerative cooling circuit, a fuel tank configured to support fuel, a water tank configured to support water, and a valve disposed between the water tank and the regenerative cooling circuit. The valve is actuatable to dispense water from the water tank when the hypersonic vehicle reaches a threshold speed (e.g., about Mach 6) to enable the water to mix with the fuel to produce a combustible mixture that passes through the regenerative cooling circuit. The combustible mixture is configured to inhibit fuel coking and has a predetermined thermal property configured to cool a surface of a hot engine wall of the hypersonic vehicle as the combustible mixture passes through the regenerative cooling circuit.

In aspects, a pump may be configured to pump either the fuel or the fuel and the water from the fuel tank or the water tank, respectively, to the regenerative cooling circuit.

In aspects, a fuel injector may be operably coupled to the regenerative cooling circuit and configured to inject either the fuel or the fuel and the water that comprise the combustible mixture into a combustion chamber.

In aspects, an emulsifier may be configured to mix the fuel and the water together.

In aspects, a steam reformer unit may include a catalyst and may be configured to react the combustible mixture in the presence of the catalyst to produce a syngas comprising carbon monoxide and hydrogen.

In accordance with further aspects of this disclosure, a hypersonic engine system for a hypersonic vehicle includes a housing, a fuel tank configured to support fuel, a water tank configured to support water, a regenerative cooling circuit, and a pump. The housing defines an air intake, a combustion chamber, and an exhaust nozzle. The regenerative cooling circuit is disposed in communication with the fuel tank and the water tank and is configured to supply a combustible mixture of the fuel and the water to the combustion chamber. The pump is configured to pump either the fuel or the fuel and the water that comprise the combustible mixture to the regenerative cooling circuit.

In further aspects, the housing may further include a hot engine wall thermally coupled to the regenerative cooling circuit. The regenerative cooling circuit may be positioned to cool the hot engine wall when the combustible mixture passes therethrough.

In further aspects, the hypersonic engine system may include a first valve and a second valve. The first valve may be configured to selectively enable fuel to flow from the fuel tank to the regenerative cooling circuit and the second valve may be configured to selectively enable water to flow from the water tank to the regenerative cooling circuit.

In further aspects, the catalyst may be disposed in the regenerative cooling circuit and may be configured to form a syngas.

This disclosure also provides a method of cooling and fueling a hypersonic engine of an aerial vehicle. The method includes selectively mixing a hydrocarbon fuel from a fuel tank of an aerial vehicle with water from a water tank of an aerial vehicle to form a hydrocarbon-fuel-water mixture. The method includes supplying the hydrocarbon-fuel-water mixture to a cooling channel of a regenerative cooling circuit. The method includes heating the hydrocarbon-fuel-water mixture by absorbing thermal energy from at least a portion of at least one of a hypersonic engine or a wall of an aerial vehicle via the cooling channel. The method includes injecting the heated hydrocarbon-fuel-water mixture into at least one of a combustion chamber or an air duct of the hypersonic engine.

In aspects, the hydrocarbon-fuel-water mixture may include a water content from about 0 percent by weight (wt.%) to about 50 wt.%.

In aspects, the hydrocarbon-fuel-water mixture may include a water content from about 50 wt.% to about 70 wt.%.

In aspects, the hydrocarbon fuel may be at least one of JP-7, JP-8, JP-10, RP-2, LNG, methane, or propane.

In aspects, the method may include emulsifying the hydrocarbon-fuel-water-mixture before supplying the hydrocarbon-fuel-water mixture to the regenerative cooling circuit.

In aspects, the method may include the steps of: heating the hydrocarbon-fuel-water mixture to a steam reformation temperature; and passing the hydrocarbon-fuel-water mixture through a steam reforming unit including a catalyst where at least a portion of the hydrocarbon-fuel-water mixture reforms into a syngas.

In aspects, the steam reforming unit may be disposed in the regenerative cooling circuit or after the regenerative cooling circuit.

In aspects, a hydrogen content of the syngas may be from about 0 wt.% to about 8 wt.%.

Other aspects, features, and advantages will be apparent from the description, the drawings, and the claims that follow.

### BRIEF DESCRIPTION OF THE DRAWINGS

A better understanding of the features and advantages of the disclosed technology will be obtained by reference to the following detailed description that sets forth illustrative aspects, in which the principles of the technology are utilized, and the accompanying drawings of which:
FIG. 1 is a diagram of a hypersonic engine cooled and fueled by a hydrocarbon fuel water mixture, in accordance with aspects of this disclosure;
FIG. 2 is a diagram of a hypersonic engine including a steam reforming unit for fuel-steam reformation of a mixture of a hydrocarbon fuel and water, in accordance with aspects of this disclosure;
FIG. 3 is a diagram of a hypersonic engine with an emulsifier for mixing hydrocarbon fuel and water, in accordance with aspects of this disclosure;
FIG. 4 is a graph of thrust and specific impulse (Iₛₚ) of a mixed hydrocarbon-water fuel as a function of the water wt.% in the mixture, in accordance with aspects of this disclosure;
FIG. 5 is a graph comparing heat absorption of a hydrocarbon fuel and a hydrocarbon-fuel-water mixture at various temperatures, in accordance with aspects of this disclosure; and
FIG. 6 is a flow chart of a method for cooling and fueling a hypersonic engine, in accordance with aspects of this disclosure.

### DETAILED DESCRIPTION

Aspects of the presently disclosed systems are described in detail with reference to the drawings, in which like reference numerals designate identical or corresponding elements in each of the several views.

Although this disclosure will be described in terms of specific aspects, it will be readily apparent to those skilled in this art that various modifications, rearrangements, and substitutions may be made without departing from the spirit of this disclosure.

As used herein, the term "about" means that the numerical value is approximate and small variations would not significantly affect the practice of the disclosed aspects of this disclosure. Where a numerical limitation is used, unless indicated otherwise by the context, "about" means the numerical value can vary by ±10% and remain within the scope of the disclosed aspects of this disclosure.

This disclosure provides a cooling and fueling system (CAFS) of a hypersonic engine for a hypersonic vehicle that provides greater cooling efficiency and capacity in comparison to traditional cooling and fueling systems. The CAFS improves performance of a hypersonic engine, such as scramjet or ramjet engines, and extends a flight Mach number range of the hypersonic engine by utilizing a hydrocarbon-fuel-water mixture for cooling the hypersonic engine that enhances engine operability and performance.

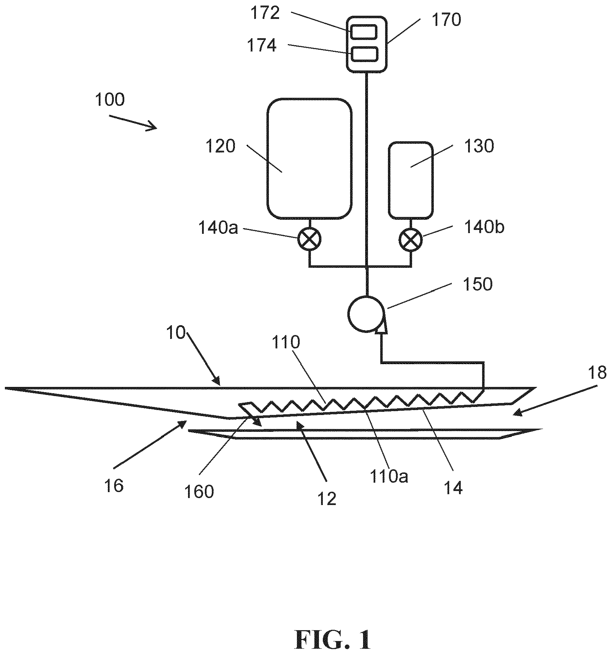

With reference to FIG. 1, a cooling and fueling system (CAFS) 100 for a hypersonic engine 10 includes a regenerative cooling circuit 110, a fuel tank 120, and a water tank 130. The fuel tank 120 and the water tank 130 are disposed in fluid communication with the regenerative cooling circuit 110. The CAFS 100 may include a first valve 140a disposed in fluid communication with, and between, the fuel tank 120 and the regenerative cooling circuit 110. The CAFS 100 may include a second valve 140b disposed in fluid communication with, and between, the water tank 130 and the regenerative cooling circuit 110. In aspects, a single three-way valve may control flow from both the fuel tank 120 and the water tank 130. A pump 150 is configured to pump at least one of fuel or water from the fuel tank 120 or water tank 130 to the regenerative cooling circuit 110 and/or to a combustion chamber 12 of the hypersonic engine 10. A fuel injector 160 is disposed in fluid communication with the regenerative cooling circuit 110 and may be disposed at a portion of the regenerative cooling circuit 110 where the fuel or hydrocarbon-fuel-water mixture is at its hottest. For example, the fuel injector 160 may be disposed at an end portion or an intermediate portion of the regenerative cooling circuit 110 when the end portion or the intermediate portion is where the fuel or hydrocarbon-fuel-water mixture is at its hottest. The fuel injector 160 is configured to inject fuel or hydrocarbon-fuel-water mixture into the combustion chamber 12.

The fuel tank 120 may contain any hydrocarbon fuel including JP-7, JP-8, JP-10, RP-2, LNG, methane, or propane.

The regenerative cooling circuit 110 of CAFS 100 includes a plurality of cooling channels or pipes 110a that are adjacent a surface or a hot engine wall 14 of a housing of the hypersonic engine 10. The hot engine wall 14 defines the combustion chamber 12. The regenerative cooling circuit 110 is configured to cool the hot engine wall 14 by enabling hydrocarbon fuel and/or hydrocarbon-fuel-water mixture to flow through the cooling channels or pipes and absorb heat from the hot engine wall. In effect, the regenerative cooling circuit 110 operates as a heat exchanger that removes heat from the hot engine wall 14. For example, the plurality of cooling channels or pipes 110a may be surrounded by fins extending from the hot engine wall 14 or may be in direct contact with the hot engine wall 14. In aspects, the plurality of cooling channels or pipes 110a may absorb heat from the hot engine wall 14 via convection, conduction, and/or radiation.

The first and second valves 140a, 140b of CAFS 100 may be operated independently to selectively enable fuel from the fuel tank 120 or water from the water tank 130, respectively, to flow to the regenerative cooling circuit 110. In aspects, a controller 170 of CAFS 100 is configured to selectively enable the fuel or water to flow to the regenerative cooling circuits. The controller 170 may be configured to control operation of at least one of the first valve 140a, the second valve 140b, or the pump, The first and second valves 140a, 140b are disposed upstream of the pump 150 of CAFS 100. In aspects, two pumps may be used, and the first and second valves 140a, 140b may be disposed upstream or downstream of the two pumps. In aspects, the pump 150 may be replaced or used in combination with a blowdown system (not explicitly shown) to cause the fuel or water to flow toward the regenerative cooling circuit 110. The blowdown system comprises a pressurized fuel tank and a pressurized water tank, such that, when the first or second valves 140a, 140b are in an opened state, fuel or water flow to the regenerative cooling circuit 110. When the first and second valves 140a, 140b are both in an opened state, hydrocarbon fuel and water are mixed together to form a combustible mixture (e.g., a hydrocarbon-fuel-water mixture) as the hydrocarbon fuel and the water flow toward and through the regenerative cooling circuit.

The controller 170 of CAFS 100 has a processor 172 and a memory 174. The memory 174 includes instructions stored thereon which, when executed by the processor 172, control at least one of the first or second valves 140a, 140b to close or open the first or second valves 140a, 140b. The processor 172 and the memory 174 may be disposed in and supported by the housing of the hypersonic engine 10 or of a hypersonic vehicle supporting the hypersonic engine 10. In various aspects, the processor 172 may be any type of processor such as, for example, a digital signal processor, a microprocessor, general purpose microprocessors, an application specific integrated circuits (ASICs), a graphics processing unit (GPU), a field-programmable gate array (FPGA), or a central processing unit (CPU). In various aspects, the memory 174 can be random access memory, read-only memory, magnetic disk memory, solid-state memory, optical disc memory, and/or another type of memory (e.g., RAM, ROM, EEPROM, flash memory, or the like). In various aspects, the memory 174 can be separate from the controller 170 and can communicate with the processor 172 through communication buses of a circuit board and/or through communication cables such as serial ATA cables or other types of cables. The memory 174 includes computer-readable instructions that are executable by the processor to operate the first and/or second valves 140a, 140b. In various aspects, the controller 170 may include a network interface to communicate with other computers or a server.

The CAFS 100 may include a plurality of sensors (not shown) including a first sensor configured to detect a temperature of the hot engine wall 14 and a second sensor configured to detect a hypersonic vehicle flight velocity of the CAFS 100. The plurality of sensors are coupled to the controller 170 wirelessly or via a wired connection so that the controller can operate the plurality of valves between open and closed states depending on the hypersonic vehicle flight velocity of the CAFS 100 and/or the temperature of the hot engine wall 14.

When the hypersonic engine 10 is in an acceleration phase through moderate Mach numbers, from starting conditions of the hypersonic engine at about Mach 3 to about Mach 6, the CAFS 100 pumps or supplies only hydrocarbon fuel to the regenerative cooling circuit 110 when a heat sink capacity of the hydrocarbon fuel is sufficient to cool the hot engine wall 14 without over fueling or over cooling. In this early acceleration phase (e.g., from starting conditions of the hypersonic engine at about Mach 3 to about Mach 6), only the first valve 140a is an opened state. The hydrocarbon fuel flows from the fuel tank 120, absorbs heat from the hot engine wall 14 via the regenerative cooling circuit 110, and is injected into the combustion chamber 12 via the fuel injector 160.

As the Mach number of the hypersonic engine 10 increases beyond about Mach 6, the temperature of the hydrocarbon fuel at the exit of the cooling channels begins to reach a fuel coking limit of the hydrocarbon fuel. To maintain optimal operation of the engine without fuel coking from threshold speed (e.g., about Mach 6) to cruise flight conditions, or about Mach 6 to about Mach 8 and higher, the second valve 140b is opened (e.g., by an instruction from controller 170) and water flows from the water tank 130 to the regenerative cooling circuit 110 in increasing amounts. The water may be mixed with the hydrocarbon fuel upstream of the pump 150 to produce a hydrocarbon-fuel-water mixture that is supplied to the regenerative cooling circuit 110 and the fuel injector 160.

The presence of water in the hydrocarbon-fuel-water mixture slows down the rate of fuel coking thus mitigating the need for over fueling to cool the hot engine wall 14. By adding water, over fueling may not be needed until higher Mach numbers (e.g., from about Mach 8 or greater). The water at least partially mitigates the amount of solid carbon or graphitic carbon that is produced. Thus, the water serves to raise an effective coking limit of the hydrocarbon fuel as the hydrocarbon fuel can be raised in temperature without concerns of fouling the fuel injector 160, the regenerative cooling circuit 110, the combustion chamber 12, or other components that may be fouled or choked by the carbon deposits. For example, per a chemical equilibrium analysis (Carbon omitted) at 700 pounds per square inch (psi) and 1,200 Kelvin (K) of a 50/50 JP-10/water (C₁₀H₁₆/H₂O) mixture, the conversion of the hydrocarbon-fuel-water mixture is dominated by carbon monoxide (CO - 54 wt.%). In the example, other substantial species produced by the addition of the water to the fuel includes methane (CH₄ - 24%), carbon dioxide (CO₂ - 10%), water (H₂O - 7%), and hydrogen (H₂ - 5%). Further, the water itself in the hydrocarbon-fuel-water mixture absorbs some heat from the hot engine wall 14. Water has a significantly higher capacity to absorb heat or serve as a heat sink than hydrocarbon fuels and thus less water is needed than excessive fuel (otherwise used for over fueling) to keep the temperature of the hydrocarbon-fuel-water mixture that is exiting the regenerative cooling circuit and is injected into the combustion chamber 12 within coking limits. Thus, the more water that is present in the hydrocarbon-fuel-water mixture the less coking will occur. Additionally, since there is less fuel there is less carbon present that feeds the coking process. Returning to the example above, approximately 2.5x less fuel contacts the hot engine wall 14 in the 50/50 JP-10 fuel/water mixture than when using pure JP-10 fuel when overfueling at Mach 8

The hydrocarbon-fuel-water mixture has a thermal property that is configured to cool the surface of the hot engine wall 14 as it passes through the regenerative cooling circuit 110. The thermal property of the hydrocarbon-fuel-water mixture is the heat sink capacity, thermal mass, thermal conductivity, and/or the specific heat of the hydrocarbon-fuel-water mixture that enable the hydrocarbon-fuel-water mixture to absorb heat or thermal energy from the hypersonic engine 10. For example, the specific heat of water is about 4.187 kilojoules per kilogram-kelvin (kJ/kg-K) (in liquid form) and the specific heat of JP-8 jet fuel is about 1.95 kJ/kg-K, and, thus, when mixed together have a greater specific heat than JP-8 jet fuel alone depending on the ratio of the water to the JP-8 jet fuel.

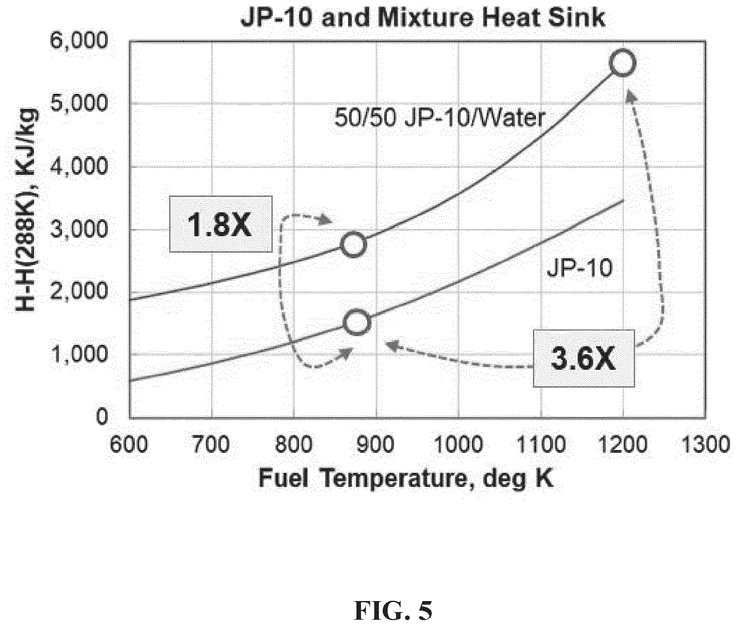

With additional reference to FIG. 5, the coking begins at different temperatures and pressures depending on the hydrocarbon fuel, and further depends on how much water may be in the hydrocarbon-fuel-water mixture. For example, as illustrated in FIG. 5, hydrocarbon JP-10 fuel's coking temperature depends on a pressure range from about 500 pounds per square inch (psi) to about 1,000 and occurs at temperatures greater than about 850 Kelvin (K). As shown in Figure 5, a heat sink absorption capability (difference of the enthalpy at the conditions of interest and enthalpy at the inlet of the cooling circuit, e.g., at 288K) of a hydrocarbon-fuel-water mixture comprising 50% JP-10 fuel and 50% water at 873 K (where no steam reforming is observed) exceeds the heat sink absorption capability of pure JP-10 fuel at an assumed coking limit of 873K by as much as 1,8x the amount heat sink absorption. At 1200 K, where pronounced steam reforming may occur, the hydrocarbon-fuel-water mixture comprising 50% JP-10 fuel and 50% water has a heat sink absorption capability that is about 3.6 times greater than JP-10 fuel alone at the temperature at coking limit. Steam reforming also depends on pressure (e.g., 500 psi to 1,000 psi) and may start at temperatures about or greater than 900 K.

Returning to FIG. 1, the amount of water supplied to the regenerative cooling circuit 110 can be controlled by the second valve 140b to increase or decrease the amount of water supplied and therefore the amount of heat that can be absorbed by the hydrocarbon-fuel-water mixture. The hydrocarbon-fuel-water mixture may have a water content ratio from about 0 percent by weight (wt.%) to about 50 wt.%. In aspects, the hydrocarbon-fuel-water mixture may have a water content ratio from about 50 wt.% to about 70 wt.%. In aspects, the hydrocarbon-fuel-water mixture may have a water content ratio from about 0 wt.% to about 70 wt.%. At a water content greater than 50 wt.%, the performance of the CAFS 100 begins to diminish, but may provide advantages under some useful circumstances such that water contents approaching about 70 wt.% may be utilized. For example, if cooling benefits of the usage of 50/50 JP-10/water mixture are exhausted at Mach 8 and further acceleration is needed, over fueling with the 50/50 JP-10/water mixture will be required to continue keeping temperature of the structural materials (e.g., hot engine wall 14) within the coking limit. It may be beneficial to further increase water content in the mixture to achieve a 30/70 JP-10/water mixture rather than over fueling given a sufficient level of the steam reforming is achievable for sustained combustion. In aspects, the amount of water supplied may predetermine the thermal property of the hydrocarbon-fuel-water mixture to absorb heat. In aspects, the amount of water supplied may be determined by the controller 170 based on a specific flight mission or flight requirement.

When the hypersonic engine reaches cruise flight velocity (e.g., Mach 8), a maximum amount of water (e.g., 50 wt. %) may be mixed with the hydrocarbon fuel increasing hydrocarbon-fuel-water mixture's heat sink capacity by about 2 to 4 times that of the hydrocarbon fuel alone, depending on the fuel type (e.g., JP-8, or JP-10) and the exit temperature of the hydrocarbon fuel (alone) and the hydrocarbon-fuel-water mixture at the fuel injector 160.

A small amount of over fueling can be utilized before water from the water tank 130 is supplied to the regenerative cooling circuit 110. Moreover, a cooling scenario with excessive amounts of hydrocarbon fuel can be extended to extremely high Mach numbers (e.g., Mach 8) when the vehicle stops acceleration and switches on the cruise flight. In this case, water is utilized only on cruise flight operational mode. These scenarios are subject to engine and vehicle optimization.

Additionally, at elevated temperatures (e.g., greater temperatures than about 900 Kelvin) fuel steam reforming occurs in the regenerative cooling circuit 110 which has an exceedingly high endothermic effect further cooling the hot engine wall 14. Further, steam reforming generates significant amounts of hydrogen which is known to promote better combustion efficiency compared to the hydrocarbon fuel alone. As a result, a higher specific impulse (I_{SP}) and a higher thrust is generated compared to an over cooled pure hydrocarbon-fueled hypersonic engine. A catalyst (not explicitly shown) may be disposed in the regenerative cooling circuit 110. The catalyst may be based on nickel or platinum group metals as a catalytic component. In aspects, the catalyst may coat at least a portion of the regenerative cooling circuit 110. In aspects, the catalyst may be disposed in or coat the hottest portion of the regenerative cooling circuit 110 where the temperature of the hydrocarbon-fuel-water mixture is about 900 Kelvin or greater. The catalyst may be configured to form a syngas and/or absorb heat from the hot engine wall 14 to facilitate steam reformation of the hydrocarbon fuel.

In aspects, where cryogenic fuels (e.g., LNG, methane or propane) are used by the CAFS 100, and contained by the fuel tank 120, the cryogenic fuel is preliminarily heated to a temperature at least equal to or greater than a freezing temperature of water by a first pass through the regenerative cooling circuit 110 (or another heat exchanger) and then mixed with water and passed through the regenerative cooling circuit 110. The cryogenic fuels and the water may both be heated to a gaseous state before the cryogenic fuels and water are mixed together.

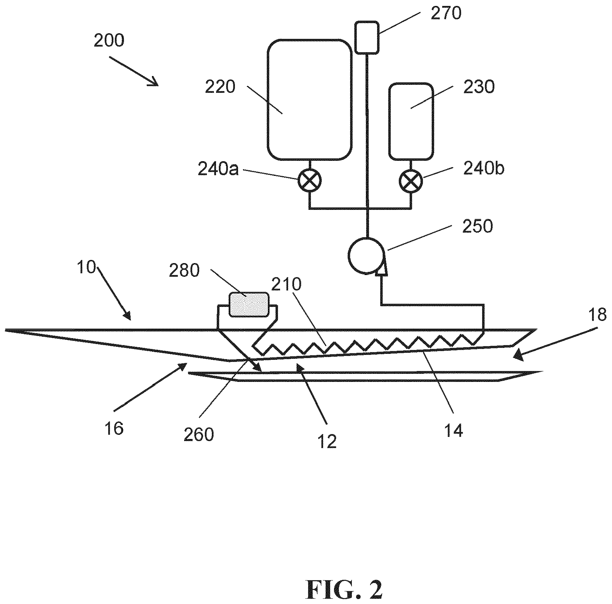

With additional reference to FIG. 2, another cooling and fueling system (CAFS) 200 is shown and includes features of CAFS 100, and accordingly, only the differences will be described.

The CAFS 200 includes a steam reforming unit 280 configured to facilitate reformation of the hydrocarbon-fuel-water mixture. The steam reforming unit 280 contains the catalyst for reacting with the hydrocarbon-fuel-water mixture. The steam reforming unit 280 may be provided within the regenerative cooling circuit 210 or downstream of the regenerative cooling circuit 210 but upstream of the injector 260.

Fuel steam reformation is an endothermic catalytic reaction occurring at temperatures greater than about 900 Kelvin between hydrocarbon and water which is often reached near the end of the regenerative cooling circuit 210. Advantageously, because fuel steam reformation is an endothermic catalytic reaction, the fuel steam reformation enhances the cooling ability of the CAFS 200 while significantly increasing the ignitability and combustion efficiency of the hydrocarbon-fuel-water mixture due to the presence of pure hydrogen. The product of the fuel steam reformation contains substantial amounts of (e.g., greater than 50%) syngas comprising carbon monoxide and hydrogen. The hydrogen content of the syngas may be about 0 wt.% to about 8 wt.%. Even where no hydrogen is produce (e.g., when the hydrogen content is 0 wt.%), the presence of the water provides additional thermal heat sink capabilities to cool the engine wall due to the endothermic nature of the catalytic reaction permitting higher Mach numbers or greater thermal margins. The hydrocarbon-fuel-water mixture is most beneficial when fuel steam reforming is observed at the exit of the regenerative cooling circuit 110 where the hydrogen produced by the fuel steam reformation is injected into the combustion chamber (e.g., when the hydrogen content is greater than 0 wt.%). Further, due to the short residence time (e.g., 1-10 milliseconds) of the hydrocarbon-fuel-water mixture and/or the syngas in the combustion chamber, the presence of hydrogen produced from the fuel steam reformation process promotes higher combustion efficiency of the reformation product in the air compared to non-reformed fuel.

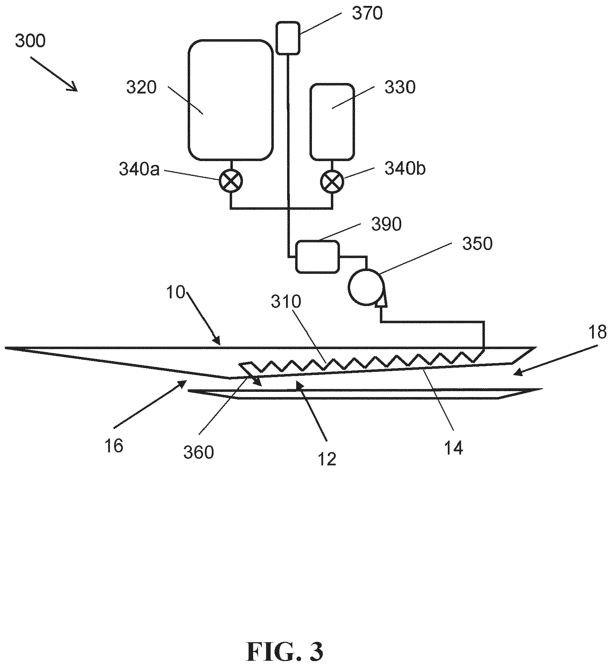

With reference to FIG. 3, another cooling and fueling system (CAFS) 300 is shown and may include features of CAFS 100 or CAFS 200, and accordingly, only the differences will be described.

The CAFS 300 includes an emulsifier 390 disposed upstream of the pump 350. In aspects, the emulsifier 390 may be disposed downstream of the pump 350 but upstream of the regenerative cooling circuit 310. Since water and hydrocarbon fuels (such as JP-10) are not naturally miscible fluids, the emulsifier 390 operates to sufficiently mix the hydrocarbon fuel and the water to form the hydrocarbon-fuel-water mixture. Emulsifying the hydrocarbon fuel and the water prevents unwanted separation of the hydrocarbon fuel and water and enables sustainable pumping of the hydrocarbon-fuel-water mixture and more even and consistent cooling of the hot engine wall 14 as the hydrocarbon-fuel-water mixture passes through the regenerative cooling circuit 310.

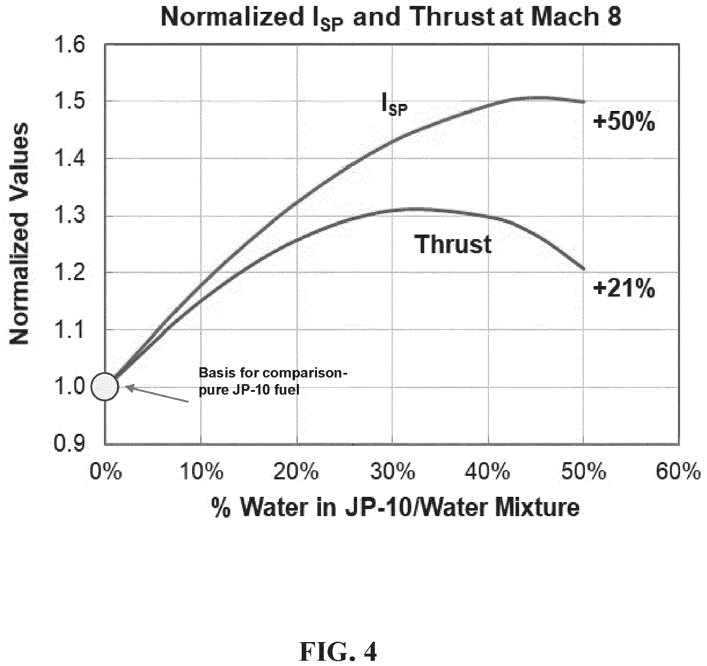

FIG. 4 illustrates a diagram comparing thrust and specific impulse (I_{SP}) of a hydrocarbon-fuel-water mixture, comprising JP-10 hydrocarbon fuel and water, as a function of the water wt.% in the hydrocarbon-fuel-water mixture in a hypersonic scramjet engine moving at about Mach 8. A hypersonic scramjet engine using only JP-10 fuel (not a mixture) requires ~2.5 times more fuel versus the best performing stoichiometric operation of a hypersonic engine using a hydrocarbon-fuel-water mixture. Figure 4 In the diagram, a value of 1 along the y-axis is the normalized specific impulse and thrust at Mach 8 for a hypersonic vehicle fueled only by JP-10 (without any water, e.g., 0 wt.% of water). At a 1:1 ratio of JP-10 and water (or 50 wt.% hydrocarbon fuel and 50 wt.% water) it was estimated that over fueling is not required and the hypersonic scramjet engine may operate at near stoichiometric air and hydrocarbon-fuel-water mixture ratio. As illustrated in FIG. 4, a 1:1 ratio of JP-10 to water (or 50 wt.% of each hydrocarbon fuel and water) enables about 50% higher I_{SP} and about 20% higher thrust compared to a hypersonic engine traveling at Mach 8 with pure JP-10 hydrocarbon fuel (in which case over fueling is required).

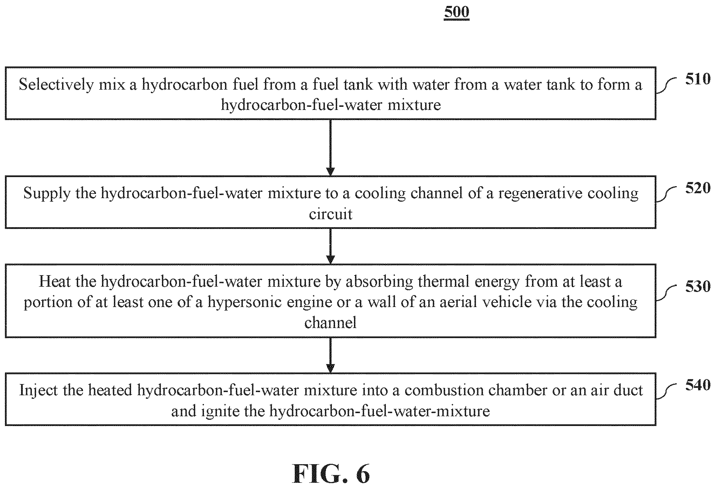

With reference to FIG. 6, a method 500 for cooling and fueling a hypersonic engine is shown. At step 510, the method includes selectively mixing a hydrocarbon fuel from a fuel tank (e.g., 120) with water from a water tank (e.g., 130) to form a hydrocarbon-fuel-water mixture. At step 520, the method includes supplying the hydrocarbon-fuel-water mixture to a cooling channel of a regenerative cooling circuit (e.g., 110). At step 530, the method includes heating the hydrocarbon-fuel-water mixture by absorbing thermal energy from at least a portion of at least one of a hypersonic engine (e.g., 10) or a wall of an aerial vehicle. At step 540, the method includes injecting the heated hydrocarbon-fuel-water mixture into a combustion chamber or an engine air duct. Step 540 may further include igniting the hydrocarbon-fuel-water mixture in the air flow as or after the hydrocarbon-fuel-water mixture is injected into the combustion chamber or engine air duct. The method 500 may include heating the hydrocarbon-fuel-water mixture to a steam reformation temperature (e.g., about, or greater than 900 Kelvin) and reforming the hydrocarbon-fuel-water mixture by passing the hydrocarbon-fuel-water mixture through a steam reforming unit including a catalyst for enabling steam reforming of the hydrocarbon fuel of the hydrocarbon-fuel-water mixture. The method includes producing a syngas including at least about 0% to about 8% of pure hydrogen. In aspects, only a portion of the hydrocarbon-fuel-water mixture is reformed.

The aspects disclosed herein are examples of the disclosure and may be embodied in various forms. For instance, although certain aspects herein are described as separate aspects, each of the aspects herein may be combined with one or more of the other aspects herein. Specific structural and functional details disclosed are not to be interpreted as limiting, but as a basis for the claims and as a representative basis for teaching one skilled in the art to variously employ this disclosure in any appropriately detailed structure.

The phrases "in an aspect," "in aspects," "in various aspects," "in some aspects," or "in other aspects" may each refer to one or more of the same or different aspects in accordance with this disclosure. A phrase in the form "A or B" means "(A), (B), or (A and B)." A phrase in the form "at least one of A, B, or C" means "(A); (B); (C); (A and B); (A and C); (B and C); or (A, B, and C)."

Persons skilled in the art will understand that the structures and methods specifically described herein and shown in the accompanying figures are non-limiting exemplary aspects, and that the description, disclosure, and figures should be construed merely as exemplary of aspects. It is to be understood, therefore, that this disclosure is not limited to the precise aspects described, and that various other changes and modifications may be effectuated by one skilled in the art without departing from the scope or spirit of the disclosure. Additionally, the elements and features shown or described in connection with certain aspects may be combined with the elements and features of certain other aspects without departing from the scope of this disclosure, and that such modifications and variations are also included within the scope of this disclosure. Accordingly, the subject matter of this disclosure is not limited by what has been particularly shown and described.

Further aspects of the invention are provided by the subject matter of the following clauses:
1. A cooling and fueling system for a hypersonic vehicle, the cooling and fueling system comprising:
   a regenerative cooling circuit;
   a fuel tank configured to support fuel;
   a water tank configured to support water;
   a valve disposed between the water tank and the regenerative cooling circuit, the valve being actuatable to dispense water from the water tank when the hypersonic vehicle reaches a threshold speed to enable the water to mix with the fuel to produce a combustible mixture that passes through the regenerative cooling circuit, the combustible mixture configured to inhibit fuel coking and having a predetermined thermal property configured to cool a surface of a hot engine wall of the hypersonic vehicle as the combustible mixture passes through the regenerative cooling circuit.
2. The cooling and fueling system for a hypersonic vehicle of any preceding clause, further comprising a pump configured to pump either the fuel or the fuel and the water from the fuel tank or the water tank, respectively, to the regenerative cooling circuit.
3. The cooling and fueling system for a hypersonic vehicle of any preceding clause, further comprising a fuel injector operably coupled to the regenerative cooling circuit and configured to inject either the fuel or the fuel and the water that comprise the combustible mixture into a combustion chamber of the hypersonic vehicle.
4. The cooling and fueling system for a hypersonic vehicle of any preceding clause, further comprising an emulsifier configured to mix the fuel and the water together.
5. The cooling and fueling system of any preceding clause, further comprising a steam reformer unit including a catalyst and configured to react the combustible mixture in the presence of the catalyst to produce a syngas comprising carbon monoxide and hydrogen.
6. A hypersonic engine system for a hypersonic vehicle, the hypersonic engine system comprising:
   a housing defining an air intake, a combustion chamber, and an exhaust nozzle;
   a fuel tank configured to support fuel;
   a water tank configured to support water;
   a regenerative cooling circuit disposed in communication with the fuel tank and the water tank, the regenerative cooling circuit configured to supply a combustible mixture of the fuel and the water to the combustion chamber; and
   a pump configured to pump either the fuel or the fuel and the water that comprise the combustible mixture to the regenerative cooling circuit.
7. The hypersonic engine system of any preceding clause, wherein the housing further comprises a hot engine wall thermally coupled to the regenerative cooling circuit, the regenerative cooling circuit positioned to cool the hot engine wall when the combustible mixture passes therethrough.
8. The hypersonic engine system of any preceding clause, further comprising a first valve configured to selectively enable the fuel to flow from the fuel tank to the regenerative cooling circuit and a second valve configured to selectively enable the water to flow from the water tank to the regenerative cooling circuit.
9. The hypersonic engine system of any preceding clause, further comprising a fuel injector configured to inject pump either the fuel or the fuel and the water that comprise the combustible mixture from the regenerative cooling circuit into the combustion chamber.
10. The hypersonic engine system of any preceding clause, further comprising an emulsifier configured to mix the fuel and the water into the combustible mixture.
11. The hypersonic engine system of any preceding clause, further comprising a steam reformer unit configured to react a catalyst and the combustible mixture to produce a syngas comprising carbon monoxide and hydrogen.
12. The hypersonic engine system of any preceding clause, further comprising a catalyst disposed in the regenerative cooling circuit, the catalyst configured to form a syngas.
13. A method of cooling and fueling a hypersonic engine of an aerial vehicle, the method comprising:
   selectively mixing a hydrocarbon fuel from a fuel tank of an aerial vehicle with water from a water tank of an aerial vehicle to form a hydrocarbon-fuel-water mixture;
   supplying the hydrocarbon-fuel-water mixture to a cooling channel of a regenerative cooling circuit;
   heating the hydrocarbon-fuel-water mixture by absorbing thermal energy from at least a portion of at least one of a hypersonic engine or a wall of an aerial vehicle via the cooling channel; and
   injecting the heated hydrocarbon-fuel-water mixture into at least one of a combustion chamber or an air duct.
14. The method of cooling and fueling a hypersonic engine of an aerial vehicle of any preceding clause, wherein selectively mixing the hydrocarbon-fuel-water mixture produces a hydrocarbon-fuel-water mixture that includes a water content from about 0 percent by weight (wt.%) to about 50 wt.%.
15. The method of cooling and fueling a hypersonic engine of an aerial vehicle of any preceding clause, wherein selectively mixing the hydrocarbon-fuel-water mixture produces a hydrocarbon-fuel-water mixture that includes a water content from about 50 wt.% to about 70 wt.%.
16. The method of cooling and fueling a hypersonic engine of an aerial vehicle of any preceding clause, wherein selectively mixing the hydrocarbon-fuel-water includes mixing a hydrocarbon fuel that is at least one of: JP-7, JP-8, JP-10, RP-2, LNG, methane, or propane.
17. The method of cooling and fueling a hypersonic engine of an aerial vehicle of any preceding clause, further comprising emulsifying the hydrocarbon-fuel-water-mixture before supplying the hydrocarbon-fuel-water mixture to the regenerative cooling circuit.
18. The method of cooling and fueling a hypersonic engine of an aerial vehicle of any preceding clause, further comprising:
   heating the hydrocarbon-fuel-water mixture to a steam reformation temperature; and
   passing the hydrocarbon-fuel-water mixture through a steam reforming unit including a catalyst where at least a portion of the hydrocarbon-fuel-water mixture reforms into a syngas.
19. The method of cooling and fueling a hypersonic engine of an aerial vehicle of any preceding clause, wherein the steam reforming unit is disposed in the regenerative cooling circuit or downstream of the regenerative cooling circuit.
20. The method of cooling and fueling a hypersonic engine of an aerial vehicle of any preceding clause, wherein selectively mixing the hydrocarbon-fuel-water mixture produces a hydrocarbon-fuel-water mixture that wherein a hydrogen content of the syngas is from about 0 wt.% to about 8 wt.%.

## Claims

1. A cooling and fueling system for a hypersonic vehicle, the cooling and fueling system comprising:
a regenerative cooling circuit;
a fuel tank configured to support fuel;
a water tank configured to support water;
a valve disposed between the water tank and the regenerative cooling circuit, the valve being actuatable to dispense water from the water tank when the hypersonic vehicle reaches a threshold speed to enable the water to mix with the fuel to produce a combustible mixture that passes through the regenerative cooling circuit, the combustible mixture configured to inhibit fuel coking and having a predetermined thermal property configured to cool a surface of a hot engine wall of the hypersonic vehicle as the combustible mixture passes through the regenerative cooling circuit.

2. The cooling and fueling system for a hypersonic vehicle of claim 1, further comprising a pump configured to pump either the fuel or the fuel and the water from the fuel tank or the water tank, respectively, to the regenerative cooling circuit.

3. The cooling and fueling system for a hypersonic vehicle of any preceding claim, further comprising a fuel injector operably coupled to the regenerative cooling circuit and configured to inject either the fuel or the fuel and the water that comprise the combustible mixture into a combustion chamber of the hypersonic vehicle.

4. The cooling and fueling system for a hypersonic vehicle of any preceding claim, further comprising an emulsifier configured to mix the fuel and the water together.

5. The cooling and fueling system of any preceding claim, further comprising a steam reformer unit including a catalyst and configured to react the combustible mixture in the presence of the catalyst to produce a syngas comprising carbon monoxide and hydrogen.

6. A hypersonic engine system for a hypersonic vehicle, the hypersonic engine system comprising:
a housing defining an air intake, a combustion chamber, and an exhaust nozzle;
a fuel tank configured to support fuel;
a water tank configured to support water;
a regenerative cooling circuit disposed in communication with the fuel tank and the water tank, the regenerative cooling circuit configured to supply a combustible mixture of the fuel and the water to the combustion chamber; and
a pump configured to pump either the fuel or the fuel and the water that comprise the combustible mixture to the regenerative cooling circuit.

7. The hypersonic engine system of claim 6, wherein the housing further comprises a hot engine wall thermally coupled to the regenerative cooling circuit, the regenerative cooling circuit positioned to cool the hot engine wall when the combustible mixture passes therethrough.

8. The hypersonic engine system of claim 6 or 7, further comprising a first valve configured to selectively enable the fuel to flow from the fuel tank to the regenerative cooling circuit and a second valve configured to selectively enable the water to flow from the water tank to the regenerative cooling circuit.

9. The hypersonic engine system of any of claims 6 to 8, further comprising a fuel injector configured to inject pump either the fuel or the fuel and the water that comprise the combustible mixture from the regenerative cooling circuit into the combustion chamber.

10. The hypersonic engine system of any of claims 6 to 9, further comprising an emulsifier configured to mix the fuel and the water into the combustible mixture.

11. The hypersonic engine system of any of claims 6 to 10, further comprising a steam reformer unit configured to react a catalyst and the combustible mixture to produce a syngas comprising carbon monoxide and hydrogen.

12. The hypersonic engine system of any of claims 6 to 11, further comprising a catalyst disposed in the regenerative cooling circuit, the catalyst configured to form a syngas.

13. A method of cooling and fueling a hypersonic engine of an aerial vehicle, the method comprising:
selectively mixing a hydrocarbon fuel from a fuel tank of an aerial vehicle with water from a water tank of an aerial vehicle to form a hydrocarbon-fuel-water mixture;
supplying the hydrocarbon-fuel-water mixture to a cooling channel of a regenerative cooling circuit;
heating the hydrocarbon-fuel-water mixture by absorbing thermal energy from at least a portion of at least one of a hypersonic engine or a wall of an aerial vehicle via the cooling channel; and
injecting the heated hydrocarbon-fuel-water mixture into at least one of a combustion chamber or an air duct.

14. The method of cooling and fueling a hypersonic engine of an aerial vehicle of claim 13, wherein selectively mixing the hydrocarbon-fuel-water mixture produces a hydrocarbon-fuel-water mixture that includes a water content from about 0 percent by weight (wt.%) to about 50 wt.%.

15. The method of cooling and fueling a hypersonic engine of an aerial vehicle of claim 13 or 14, wherein selectively mixing the hydrocarbon-fuel-water mixture produces a hydrocarbon-fuel-water mixture that includes a water content from about 50 wt.% to about 70 wt.%.
